Europäisches Patentamt

European Patent Office

Office européen des brevets

(11) Publication number: **0 204 270**
**B1**

## EUROPEAN PATENT SPECIFICATION

(45) Date of publication of patent specification: **16.08.89**

(51) Int. Cl.⁴: **F 16 L 55/10**

(21) Application number: **86107341.9**

(22) Date of filing: **30.05.86**

(54) A method and a fastener for closing and sealing pipes subjected to internal pressure.

(30) Priority: **31.05.85 PL 253726**
**04.04.86 PL 258771**

(43) Date of publication of application:
**10.12.86 Bulletin 86/50**

(45) Publication of the grant of the patent:
**16.08.89 Bulletin 89/33**

(84) Designated Contracting States:
**AT BE CH DE FR GB IT LI NL SE**

(56) References cited:
**EP-A-0 103 777**
**DE-A-2 147 128**
**US-A-2 699 802**

(73) Proprietor: **Instytut Chemii Przemyslowej**
**ul. Rydygiera 8**
**PL-01-793 Warszawa (PL)**

(72) Inventor: **Friedrich, Pawel**
**ul. Gen. Zajaczka 17 m 31**
**PL-01-505 Warszawa (PL)**
Inventor: **Placzek, Wieslaw**
**ul. Kickiego 5m 32**
**PL-04-373 Warszawa (PL)**
Inventor: **Mynarz, Leszek**
**ul. Batuty 1 m 108**
**PL-02-743 Warszawa (PL)**
Inventor: **Karpinski, Krzysztof**
**ul. Aleja Wyzwolenia 12 m 17**
**PL-00-570 Warszawa (PL)**
Inventor: **Gaszewski, Jerzy**
**ul. Szekspira 4 m 371**
**PL-01-913 Warszawa (PL)**
Inventor: **Tarasiuk, Tadeusz**
**ul. Krochmalna 30 m 19**
**PL-00-864 Warszawa (PL)**

(74) Representative: **Finck, Dieter et al**
**Patentanwälte v. Füner, Ebbinghaus, Finck**
**Mariahilfplatz 2 & 3**
**D-8000 München 90 (DE)**

## Description

The invention relates to a method for closing and sealing the open ends of a pipe subjected to internal pressure for testing purpose the method comprising putting fastener elements with elastic packing on the open ends of the pipe and tightening the fastener elements to a conic ring on the outer surface of the end portions of the pipe.

The invention relates further to a fastener means comprising an upper and a lower fastener element for closing and sealing the open ends of a pipe subjected to internal pressure for testing purpose, one of which, usually the upper one, has an opening connecting the pipe with a hydraulic system of a test apparatus through which the pipe is filled with a medium and deaerated, and each of them comprises a cover and a clamping ring between which a conic ring and an elastic packing are located, the medium being for example a liquid, the fastener means being particularly used for carrying out the before-mentioned method.

Such a method and such fastener means are known from the EP-A-103 777. The fastener means comprises an upper and a lower fastener element. Each fastener element consists of four main parts, namely a cover, a clamping ring, a spring conic ring and an elastic packing, which are mounted on the ends of the pipe to be tested. Screwing the cover with the clamping ring results in a compression of the conic ring on the pipe. At the same time, the cover moving relatively to the clamping ring causes tightening of the elastic packing on the pipe.

Usually, there are more than ten screws in each fastener element, screwing of which for loosening or fixing the fastener element takes a lot of time. Furthermore, there is no relationship between the force compressing the fastener elements on the pipe and the internal pressure of the medium the pipe is filled with. This results in the occurrence of additional stresses in the pipe wall, which may disturb the test run. Moreover, by mounting or demounting the fastener elements, the end faces or the end portions of the pipe are often damaged. The fastener elements of this prior art have large overall dimensions and an excessive weight.

It is the aim of the invention to elaborate a method and a fastener means of the generic kind which can be mounted and demounted in a relatively short time on the pipe to be tested simultaneously allowing to accommodate the clamp force with a pressure within the medium filling the pipe.

This aim is solved in accordance with the invention with a method of the generic kind, in that the fastener elements are tightened to the end of the pipe by a stemming force resulting from the pressure of a medium, for example a liquid, preferably from the medium forced into the pipe.

With the fastener means according to the generic kind, this aim is obtained in that the fastener elements have a non-return valve for feeding the medium into the fastener element, and a movable element with the shape of a ring which is situated pushably within the clamping ring between the cover and the conic ring, in that the elastic packing is located between the movable element and the tested pipe and in that the cover is connected with the clamping ring.

Advantageously, the non-return valve for feeding the medium into the fastener element is located in the cover.

The cover and the clamping ring can be connected by a screw joint. The fastener element can be equipped with a compensator for the pressure of the medium fed into its elements. The compensator consists of a cylinder with a moving piston which is fed on one side of the piston with a medium compressing the parts of the fastener element, and on the other side with the medium forced into the interior of the pipe to be tested. The compensator is attached to the cover on the pipe axis.

If necessary, the piston possesses two working faces of different sizes and then the compensator makes possible pressure transmission. It is expedient, especially during long-time high-pressure tests, if a packing with a flat ring membrane-like shape is placed between the cover and the movable element.

In another solution, "0"-type packings are placed between the clamping ring, the movable element, the pressure compensator cylinder and the cover.

The essence of a fastener means in accordance with a second variation of the invention, consisting of a frame, a conic ring and packings, lies in the fact that there is a non-return valve in the frame serving to supply the fastener element with the medium, e.g. with a liquid, while inside the frame a ring-bottom shaped, pushable movable element is situated. At the same time, in the bottom part of the frame and in the conic ring flange, radial cut-outs can be made which are displaced by a constant angle scale with respect to one another. The width of cut-outs in the frame and in the flange is chosen in such a way that putting the conic ring into the frame is made possible. On the other hand, one of the packings lies between the flat surface of the movable element and the front face of an end of a tested pipe. Further, packings are situated between the outer cylindrical surface of the movable element and the internal cylindrical surface of the frame as well as between the internal cylindrical surface of the movable element and the cylindrical central part of the frame.

The essence of the fastener in accordance with a third variation of the invention, as compared with the second variation, lies in the fact that the conical ring is made of ring segments, and there are no cut-outs in the frame and in the flange of these segments, because the segmental structure of the ring makes it possible to put it into the interior of the frame.

The conical ring can also be made as a uniform ring or it may possess transverse cross-cuts giving elasticity. In case of a segmental structure of the conic ring, its segments are dilated by an elastic element in form of a slit sleeve, a slit ring with a circular cross section or a cylindrical spring. In all three variations, the fastener means can possess a draining valve in their lower fastener element allowing a quick emptying the pipe of the filling medium, after a test is completed.

The pipe closing and sealing method and the fastener means for its realization presented are free of shortcomings and inconveniences of solutions used so far. Mounting of the fastener means on a pipe consists in placing the fastener elements on ends of a tested pipe and applying the pressure. This operation lasts at most 20% of the time consumed so far while fixing traditional fastener means. A very significant feature of the invention is a full proportionality of the compression force with respect to the test pressure basing on the phenomenon of equalization of the closure pressure of the fastener element and the test pressure that protects the pipe from occurence of additional, highly unfavourable stresses. Fastener means in accordance with the invention are characterized by much more concise overall dimensions resulting from elimination of screws, and their weight makes up ca. 50% of the weight of the fastener means in use up to the present.

The main advantage of the fastener in accordance with the second variation of the invention is the elimination of the screw joint which can cause difficulties during dismantling the fastener element. Instead of the cover and the clamping ring there is only one detail in form of a frame which, while possessing a special shape of the lower part, makes it possible to put inside it a conic ring being a clamping element on a pipe end. In this way, manufacturing fastener elements has been simplified and made cheaper as well as the operation of fixing and especially of dismounting of the fastener elements have been simplified and shortened, consisting in axial and then in angular shifting the conic ring relatively to the frame.

On the other hand, the fastener in accordance with the third variation of the invention, having a conical ring made of segments, does not require making cut-offs in the frame, nor in the flange of the conic ring. So it is a still simpler and cheaper version of fastener means hydraulicly closed on ends of tested pipes.

The presented method of closing and sealing of pipe ends as well as the fastener means for its realization ensure a quick and certain closure and sealing up of a pipe during the whole test process.

Fastener means in accordance with the invention have been shown in the picture presenting manufacturing examples.

Fig. 1 shows a fastener means in a first variation fastened on the ends of a tested pipe.

Fig. 2 presents a fragment of the upper fastener element with a pressure compensator.

Fig. 3 shows two projections of a conic ring built of two segments.

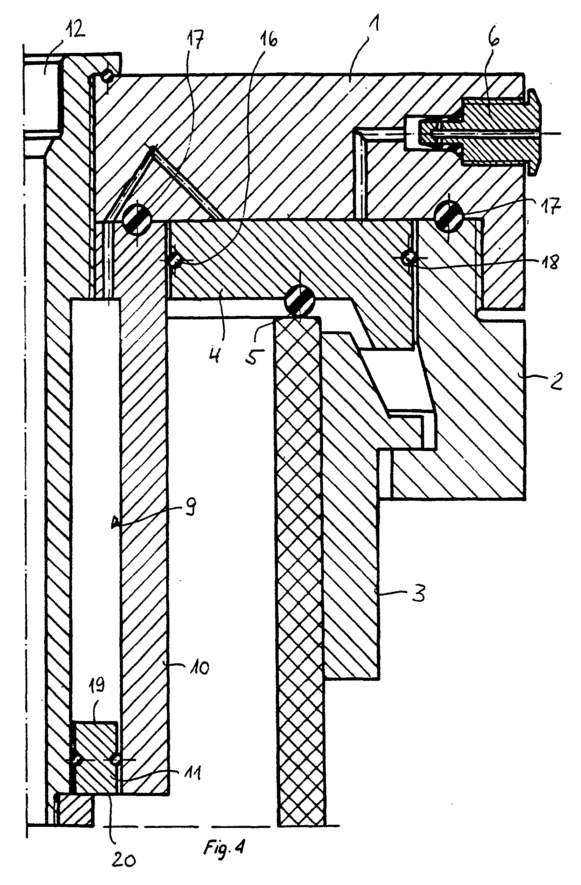

Fig. 4 presents a fragment of the upper fastener element with its parts sealed with "O"-type packings.

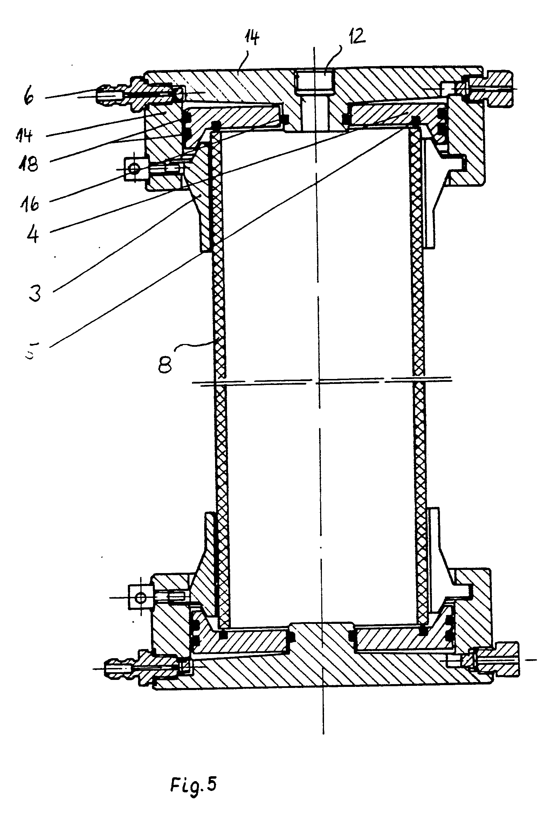

Fig. 5 presents a fastener means in a second as well as in a third variation fastend on the ends of a tested pipe.

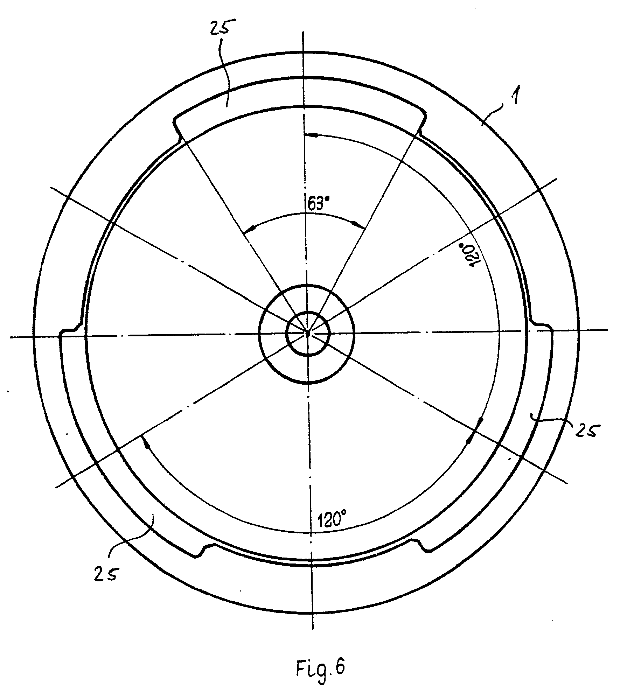

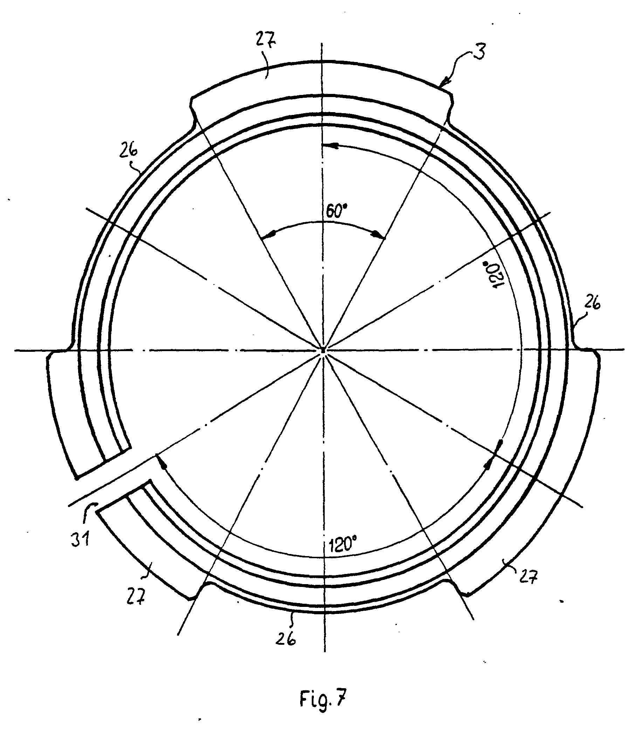

Fig. 6 and Fig. 7 present views of the frame of the fastener means and of the conical ring from the cut-offs side.

Fig. 8, 9 and 10 present a conical ring with segment structure applied in the third variation of the fastener means.

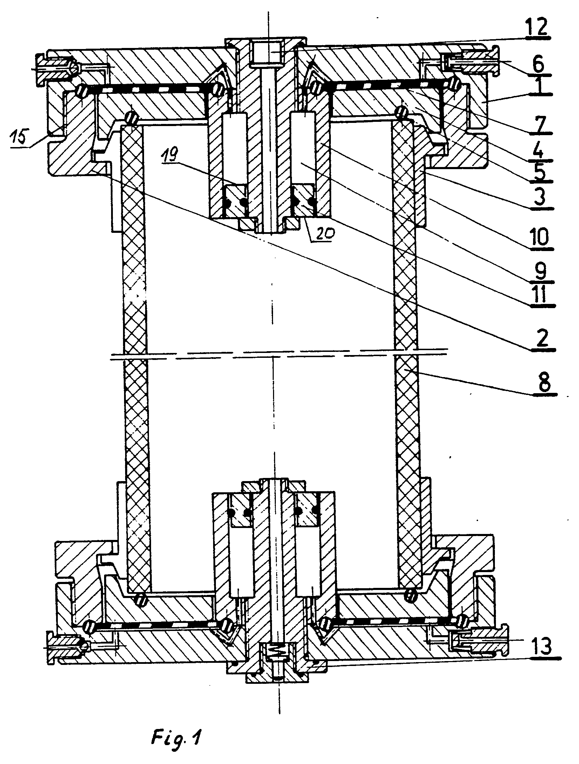

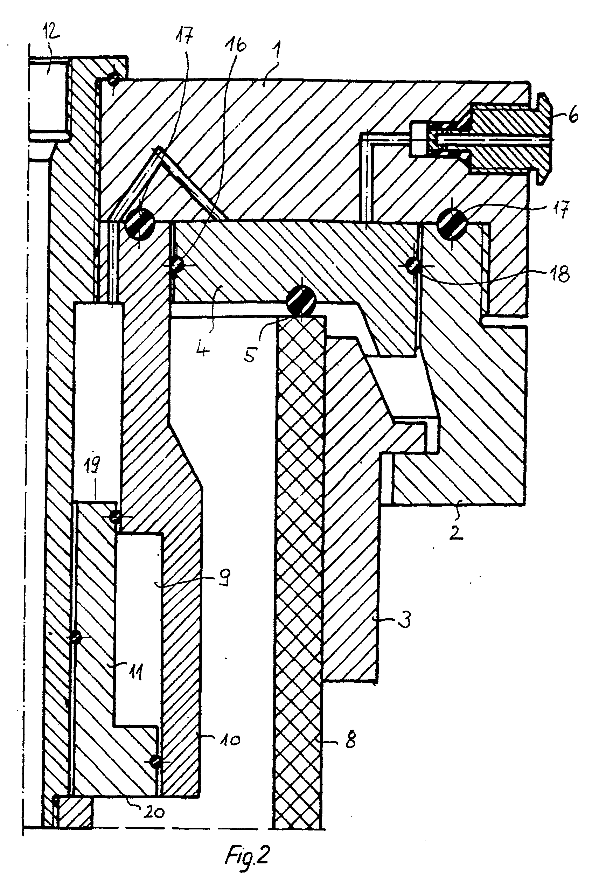

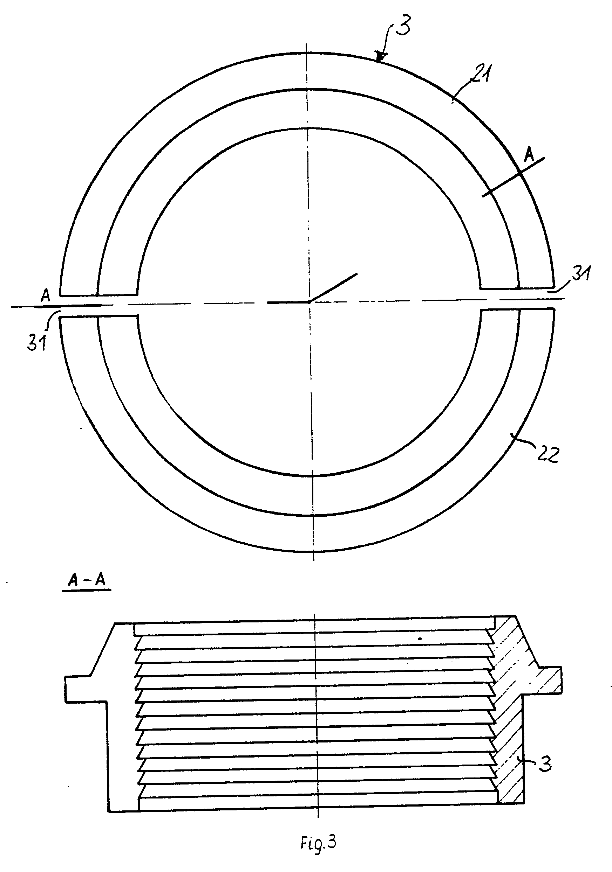

Each of the two fastener elements of the first variation consists of a cover 1 and a clamping ring 2 connected by a screw joint 15, a conical ring 3, a movable element 4 and of an elastic packing 5. Besides, there is a non-return valve 6 in the cover 1, and a membrane 7 is placed between the cover 1 and the movable element 4. The cover 1 is screwed on the clamping ring 2. The movable element 4 is situated pushably inside the clamping ring 2 and has the shape of a ring which the membrane 7 adheres to. In the axis line of a tested pipe 8 and of each of the two fastener elements, a pressure compensator 9 is attached to the cover 1. The compensator 9 consists of a cylinder 10 and a piston 11. Furthermore, there is an opening 12 in the cover 1 of the upper fastener element for feeding water into the pipe 8, while there is a draining valve 13 in the cover 1 of the lower fastener element. The piston 11 of the compensator 9 shown in Fig. 1 has two equal working faces 19, 20, whereas in Fig. 2 the two working faces 19, 20 have different sizes. The conic ring 3 fixed on the pipe 8 as it appears in Fig. 1 is a one segment ring with a cross-cut securing its elasticity. The conic ring 3 shown in Fig. 3 consists of two halves, i.e. of two segments 21 and 22, separated by a radial cross cut 31.

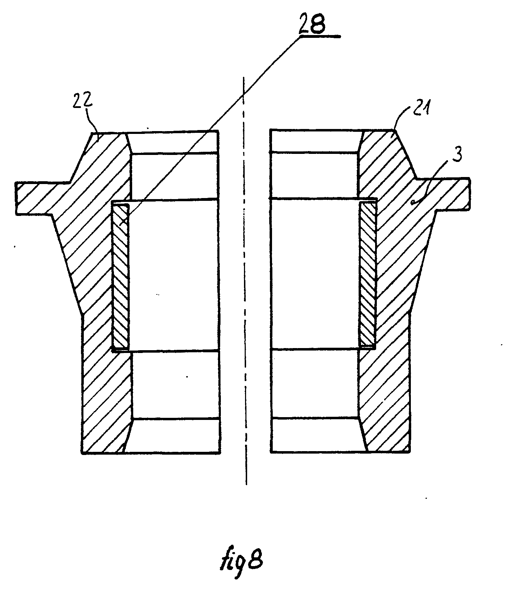

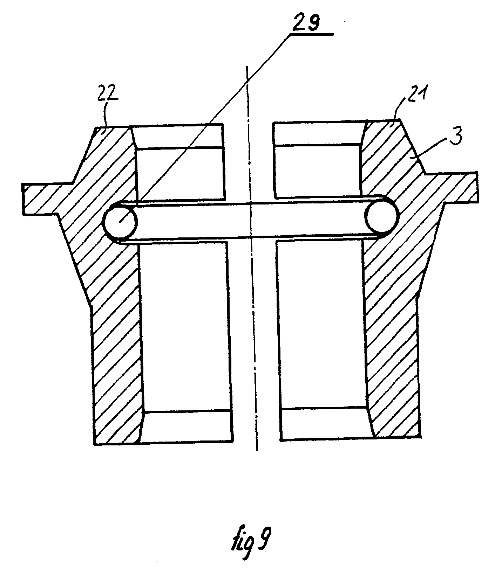

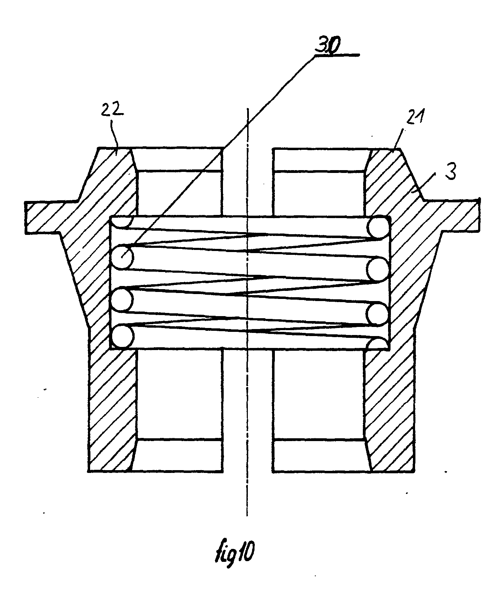

The fastener means in accordance with the second and third variation of the invention is built as follows: Inside a frame 14 consisting of the integrally connected cover 1, clamping ring 2 and a central port of the first variation, a movable element 4 and a conic ring 3 are situated. Into the frame 14 a non-return valve 6 is screwed in for delivering working medium causing hydraulic closure of the end of the pipe 8. On the internal flat surface of the movable element 4, a packing 5 is situated, while two packings 18 are situated on the cylindric outer surface, and one packing 16 is placed on the internal cylindric surface of the central part of the frame 14. In the frame 14 as well as in the conic ring 3, there are three cut-offs 25, 26 made on each distributed with a constant angular distance. The cut-offs 25, 26 in the frame 1 and in the conical ring 3 are made in fastener means constructed in accordance with the second variation of the invention. In fastener means in accordance with the third variation of the invention the conic ring 3 consists of two ring segments 21, 22 linked together by a slit sleeve 28 (Fig. 8), a slit ring 29 with a circular cross section (Fig. 9) or a circular spring 30 (Fig. 10).

The pipe closing and sealing method in accordance with the invention is presented on the example of a fastener means in accordance with the first variation of the invention and proceeds as follows: After placing both fastener elements on the ends of the pipe 8, water is fed into each one through non-return valves 6 under increased pressure. Water pressure affecting the movable element 4 through the membrane 7 causes its displacement within the clamping ring 2 and fastening the conic ring 3 on the pipe 8. At the same time, the shifting movable element 4 presses the elastic packing 5 against the end face of the pipe 8 sealing it up. That is followed by filling the pipe 8 with water through the opening 12. At this moment the piston 11 of the pressure compensator 9 takes the extreme position being shifted towards the interior of the pipe 8. If leaks emerge at joints resulting in a drop of the value of the fixing force of the fastener elements on the pipe 8, then the piston 11 moving towards the other extreme position will compensate their influence keeping suitable pressure and, as a consequence, the fixing force on the required level.

## Claims

1. A method for closing and sealing the open ends of a pipe (8) subjected to internal pressure for testing purpose, the method comprising putting fastener elements with elastic packing (5) on the open ends of the pipe (8) and tightening the fastener elements to a conic ring (3) on the outer surface of the end portions of the pipe (8), characterized in that the fastener elements are tightened to the ends of the pipe (8) by a stemming force resulting from the pressure of a medium, for example a liquid, preferably from the medium forced into the pipe (8).

2. Fastener means comprising an upper and a lower fastener element for closing and sealing the open ends of a pipe (8) subjected to internal pressure for testing purpose, one of which, usually the upper one, has an opening (12) connecting the pipe (8) with a hydraulic system of a test apparatus through which the pipe (8) is filled with a medium and deaerated, and each of them comprises a cover (1) and a clamping ring (2) between which a conic ring (3) and an elastic packing (5) are located, the medium being for example a liquid, the fastener means being particularly used for carrying out the method of claim 1, characterized in that the fastener elements have a non-return valve (6) for feeding the medium into the fastener element, and a movable element (4) with the shape of a ring which is situated pushably within the clamping ring (2) between the cover (1) and the conic ring (3), in that the elastic packing (5) is located between the movable element (4) and the tested pipe (8) and in that the cover (1) is connected with the clamping ring (2).

3. Fastener means according to claim 2, characterized in that the non-return valve (6) is located in the cover (1).

4. Fastener means according to claim 2 or 3, characterized by a compensator (9) for the pressure of the medium fed into the fastener element, the compensator (9) consisting of a cylinder (10) with a movable piston (11) which is fed on the one side with the medium clamping the parts of the fastener element, and on the other side with the medium forced into the interior of the tested pipe (8), the compensator (9) being attached to the cover (1) of the fastener element in the axis line of the pipe (8).

5. Fastener means according to claim 4, characterized in that the piston (11) of the compensator (9) has two working surfaces (19, 20) of different size.

6. Fastener means according to at least one of the claims 2 to 5, characterized in that a packing in form of a membrane (7) with a shape of a flat ring is located between the cover (1) and the movable element (4).

7. Fastener means according to at least one of the claims 3 to 5, characterized in that elastic packings (16, 17, 18) of "0"-type are placed on cylindric surfaces at the contact of the movable element (4) with the compensator (9) and with the clamping ring (2) as well as between flat contact surfaces of the cover (1) with the compensator (9) and with the clamping ring (2).

8. Fastener means according to at least one of the claims 2 to 7, characterized in that the cover (1) and the clamping ring (2) are connected by a screw joint (15).

9. Fastener means according to at least one of the claims 2 to 7, characterized in that the cover (1), the clamping ring (2) and a central part having a cylindric surface form a frame (14) in one piece.

10. Fastener means according to claim 9, characterized in that radial cut-offs (25, 26) are made in a lower part of the frame (1) and in a flange of the conic ring (3), the cut-offs (25, 26) being shifted relatively to one another by a constant angular spacing, in that the width of the cut-offs (25) in the frame (14) is greater than the width of lugs (27) between the cut-offs (26) in the flange of the conic ring (3), in that the one packing (5) lies between the flat surface of the movable element (4) and the end face of the tested pipe (8), and in that further packings (18, 16) are situated between the outer cylindric surface of the movable element (4) and the internal cylindric surface of the frame (14) as well as between the internal cylindric surface of the movable element (4) and the cylindric central part of the frame (14).

11. Fastener means according to at least one of the claims 2 to 10, characterized in that cross cuts (31) are made radially extending through the whole conic ring (3).

12. Fastener means according to claim 11, characterized in that the conic ring (3) consists of at least two ring segments (21, 22).

13. Fastener means according to claim 12, characterized in that the ring segments (21, 22) of the conic ring (3) are dilated by an elastic element (28, 29, 30) located axially inside the conic ring (3).

14. Fastener means according to claim 13, characterized in that the elastic element is a slit

sleeve (28), a slit ring (29) with circular cross section or a cylindric spring (10).

15. Fastener means according to at least one of the claims 2 to 14, characterized in that a draining valve (13) is located in the lower fastener element.

**Patentansprüche**

1. Verfahren zum Verschließen und Abdichten der offenen Enden eines Rohres (8), das zu Prüfungszwecken mit einem Innendruck beaufschlagt wird, welches Verfahren das Aufbringen von Befestigungselementen mit elastischen Packungen bzw. Dichtungen (5) auf die offenen Enden des Rohres (8) und Anziehen der Befestigungselemente an einen konischen Ring (3) an der Außenfläche der Endabschnitte des Rohres (8) umfaßt, dadurch gekennzeichnet, daß die Befestigungselemente an den Enden des Rohres (8) mittels einer Anpresskraft festgezogen werden, die vom Druck eines Mediums, z.B. einer Flüssigkeit, vorzugsweise von dem in das Rohr (8) eingepreßten Medium ausgeübt wird.

2. Befestigungseinrichtung umfassend ein oberes und ein unteres Befestigungselement zum Verschließen und Abdichten der offenen Enden eines Rohres (8), das zu Prüfungszwecken mit einem Innendruck beaufschlagt wird, von welchen eines, üblicherweise das obere, mit einer Öffnung (12) versehen ist, die das Rohr (8) mit einem hydraulischen System einer Prüfvorrichtung verbindet und durch die das Rohr (8) mit einem Medium gefüllt und entlüftet wird, und von denen jedes eine Abdeckung (1) und einen Klemmring (2) aufweist, zwischen denen ein konischer Ring (3) und eine elastische Packung bzw. Dichtung (5) angeordnet sind, wobei das Medium z.B. eine Flüssigkeit ist und die Befestigungseinrichtung insbesondere für die Durchführung des Verfahrens nach Anspruch 1 verwendet werden, dadurch gekennzeichnet, daß die Befestigungselemente mit einem Rückschlagventil (6) für die Einspeisung des Mediums in die Befestigungselemente versehen sind und ein bewegbares Element (4) in Form eines Ringes verschiebbar innerhalb des Klemmringes (2) zwischen der Abdeckung (1) und dem konischen Ring (3) angeordnet ist, daß die elastische Packung bzw. Dichtung (5) zwischen dem bewegbaren Element (4) und dem in Prüfung stehenden Rohr (8) angebracht ist, und daß die Abdeckung (1) mit dem Klemmring (2).

3. Befestigungseinrichtung nach Anspruch 2, dadurch gekennzeichnet, daß das Rückschlagventil (6) in der Abdeckung (1) untergebracht ist.

4. Befestigungseinrichtung nach Anspruch 2 oder 3, dadurch gekennzeichnet, daß ein Kompensator (9) für den Druck des dem Befestigungselement zugeführten Mediums vorgesehen ist, daß der Kompensator (9) aus einem Zylinder (10) mit einem bewegbaren Kolben (11) besteht, dem auf einer Seite das die Teile des Befestigungselementes zusammenklemmende Medium und auf der anderen Seite das in das Innere des in Prüfung stehenden Rohres (8) eingepreßte Medium zugeführt wird, und daß der Kompensator (9) an der Abdeckung (1) des Befestigungselementes in der Achsenlinie des Rohres (8) befestigt ist.

5. Befestigungseinrichtung nach Anspruch 4, dadurch gekennzeichnet, daß der Kolben (11) des Kompensators (9) zwei Arbeitsflächen (19, 20) von verschiedenen Abmessungen aufweist.

6. Befestigungseinrichtung nach wenigstens einem der Ansprüche 2 bis 5, dadurch gekennzeichnet, daß eine Packung bzw. Dichtung in Form einer Membran (7) mit der Form eines flachen Ringes zwischen der Abdeckung (1) und dem bewegbaren Element (4) angebracht ist.

7. Befestigungseinrichtung nach wenigstens einem der Ansprüche 3 bis 5, dadurch gekennzeichnet, daß elastische Packungen bzw. Dichtungen (16, 17, 18) in Form von "O"-Ringen auf zylindrische Flächen am Berührungspunkt des bewegbaren Elementes (4) mit dem Kompensator (9) und mit dem Klemmring (2) sowie zwischen den ebenen Berührungsflächen der Abdeckung (1) mit dem Kompensator (9) und mit dem Klemmring (2) angebracht sind.

8. Befestigungseinrichtung nach wenigstens einem der Ansprüche 2 bis 7, dadurch gekennzeichnet, daß die Abdeckung (1) und der Klemmring (2) mittels einer Schraubverbindung (15) verbunden sind.

9. Befestigungseinrichtung nach wenigstens einem der Ansprüche 2 bis 7, dadurch gekennzeichnet, daß die Abdeckung (1), der Klemmring (2) und ein mittlerer Abschnitt mit einer zylindrischen Oberfläche einen einstückigen Rahmen (14) bilden.

10. Befestigungseinrichtung nach Anspruch 9, dadurch gekennzeichnet, daß radiale Ausschnitte (25, 26) in einem unteren Abschnitt des Rahmens (14) und in einem Flansch des konischen Ringes (3) ausgebildet sind, daß die Ausschnitte (25, 26) in gleichmäßigen Winkelabständen gegeneinander versetzt sind, daß die Breite der Ausschnitte (25) im Rahmen (14) größer ist als die Breite von Ansätzen (27) zwischen den Ausschnitten (26) im Flansch des konischen Ringes (3), daß die eine Packung bzw. Dichtung (5) zwischen der ebenen Fläche des bewegbaren Elementes (4) und der Endfläche des in Prüfung stehenden Rohres (8) liegt und daß weitere Packungen bzw. Dichtungen (18, 16) zwischen der äußeren zylindrischen Fläche des bewegbaren Elementes (4) und der inneren zylindrischen Fläche des Rahmens (14) sowie zwischen der inneren zylindrischen Fläche sowie zwischen der inneren zylindrischen Fläche des bewegbaren Elementes (4) und dem zylindrischen Mittelabschnitt des Rahmens (14) angeordnet sind.

11. Befestigungseinrichtung nach wenigstens einem der Ansprüche 2 bis 10, dadurch gekennzeichnet, daß Quereinschnitte (31) vorgesehen sind, die sich radial durch den gesamten konischen Ring (3) erstrecken.

12. Befestigungseinrichtung nach Anspruch 11, dadurch gekennzeichnet, daß der konische Ring (3) aus wenigstens zwei Ringsegmenten (21, 22) besteht.

13. Befestigungseinrichtung nach Anspruch 12, dadurch gekennzeichnet, daß die Ringsegmente (21, 22) des konischen Ringes (3) mittels eines elastischen Elementes (28, 29, 30) ausgeweitet sind, das axial innerhalb des konischen Ringes (3) untergebracht ist.

14. Befestigungseinrichtung nach Anspruch 13, dadurch gekennzeichnet, daß das elastische Element eine geschlitzte Hülse (28), ein geschlitzter Ring (29) von kreisförmigen Querschnitt oder eine zylindrische Feder (10) ist.

15. Befestigungseinrichtung nach wenigstens einem der Ansprüche 2 bis 14, dadurch gekennzeichnet, daß ein Ablaßventil (13) in unteren Befestigungselement untergebracht ist.

**Revendications**

1 Procédé de fermeture et de scellage des extrémités ouvertes d'un conduit (8) soumis à une pression interne à des fins d'essai, ce procédé comprenant la mise en place d'éléments de fixation avec une garniture élastique (5) aux extrémités ouvertes du conduit (8) et l'ajustement par serrage des éléments de fixation à un anneau conique (3) sur la surface extérieure des parties d'extrémité du conduit (8), caractérisé en ce que les éléments de fixation sont ajustés par serrage aux extrémités du conduit (8) par une force de refoulement résultant de la pression d'un milieu, par exemple un liquide, de préférence du milieu amené dans le conduit (8).

2. Moyen de fixation comprenant un élément de fixation supérieur et inférieur pour fermer et sceller les extrémités ouvertes d'un conduit (8) soumis à une pression interne à des fins d'essai, dont l'un, habituellement le supérieur, comporte une ouverture (12) reliant le conduit (8) à un système hydraulique d'un appareil d'essai grâce auquel le conduit (8) est rempli d'un milieu et désaéré, chacun d'entre eux comprenant un couvercle (1) et un anneau de serrage (2) entre lesquels sont agencés un anneau conique (3) et une garniture élastique (5), le milieu étant, par exemple, un liquide, le moyen de fixation étant avantageusement utilisé pour la mise en oeuvre du procédé suivant la revendication 1, caractérisé en ce que les éléments de fixation comportent une soupape anti-retour (6) pour amener le milieu dans l'élément de fixation, ainsi qu'un élément mobile (4) de la forme d'un anneau qui est poussé à l'intérieur de l'anneau de serrage (2) entre le couvercle (1) et l'anneau conique (3), en ce que la garniture élastique (5) est agencée entre l'élément mobile (4) et le conduit testé (8) et en ce que le couvercle (1) est relié à l'anneau de serrage (2).

3. Moyen de fixation suivant la revendication 2, caractérisé en ce que la soupape anti-retour (6) est agencée dans le couvercle (1).

4. Moyen de fixation suivant l'une ou l'autre des revendications 2 et 3, caractérisé par un compensateur (9) pour la pression du milieu à amener dans l'élément de fixation, le compensateur (9) se composant d'un cylindre (10) et d'un piston mobile (11), qui est amené d'un côté avec le milieu serrant les pièces de l'élément de fixation, et de l'autre côté avec le milieu amené à l'intérieur du conduit testé (8), le compensateur (9) étant fixé au couvercle (1) de l'élément de fixation dans l'axe du conduit (8).

5. Moyen de fixation suivant la revendication 4, caractérisé en ce que le piston (11) du compensateur (9) comporte deux surfaces de travail (19, 20) de taille différente.

6. Moyen de fixation suivant au moins l'une quelconque des revendications 2 à 5, caractérisé en ce qu'une garniture sous forme de membrane (7) de la forme d'un anneau plat est agencée entre le couvercle (1) et l'élément mobile (4).

7. Moyen de fixation suivant au moins l'une quelconque des revendications 3 à 5, caractérisé en ce que des garnitures élastiques (16, 17, 18) toriques sont placées sur des surfaces cylindriques au contact de l'élément mobile (4) ainsi que du compensateur (9) et de l'anneau de serrage (2) ainsi qu'entre des surfaces de contact planes du couvercle (1) avec le compensateur (9) et l'anneau de serrage 2.

8. Moyen de fixation suivant au moins l'une quelconque des revendications 2 à 7, caractérisé en ce que le couvercle (1) et l'anneau de serrage (2) sont reliés par un joint à vis (15).

9. Moyen de fixation suivant au moins l'une quelconque des revendications 2 à 7, caractérisé en ce que le couvercle (1), l'anneau de serrage (2) et une pièce centrale comportant une surface cylindrique forment une structure (14) constituée d'une seule pièce.

10. Moyen de fixation suivant la revendication 9, caractérisé en ce que des découpes radiales (25, 26) sont réalisées dans une partie inférieure de la structure (1) et dans un rebord de l'anneau conique (3), les découpes (25, 26) étant mutuellement décalées d'un espacement angulaire constant, en ce que la largeur des découpes (25) dans la structure (14) est supérieure à la largeur de pattes (27) entre les découpes (26) dans le rebord de l'anneau conique (3), en ce que la garniture (5) se situe entre la surface plane de l'élément mobile (4) et la face d'extrémité du conduit testé (8) et en ce que d'autres garnitures (18, 16) sont situées entre la surface cylindrique extérieure de l'élément mobile (4) et la surface cylindrique intérieure de la structure (14) ainsi qu'entre la surface cylindrique intérieure de l'élément mobile (4) et la pièce centrale cylindrique de la structure (14).

11. Moyen de fixation suivant au moins l'une quelconque des revendications 2 à 10, caractérisé en ce que des découpes transversales (31) sont effectuées radialement et s'étendent sur la totalité de l'anneau conique (3).

12. Moyen de fixation suivant la revendication 11, caractérisé en ce que l'anneau conique (3) se compose d'au moins deux segments annulaires (21, 22).

13. Moyen de fixation suivant la revendication 12, caractérisé en ce que les segments annulaires (21, 22) de l'anneau conique (3) sont dilatés par un élément élastique (28, 29, 30) agencé axialement à l'intérieur de l'anneau conique (3).

14. Moyen de fixation suivant la revendication 13, caractérisé en ce que l'élément élastique est un manchon fendu (28), un anneau fendu (29) de section transversale circulaire ou un ressort cylindrique (10).

15. Moyen de fixation suivant au moins l'une quelconque des revendications 2 à 14, caractérisé en ce qu'une soupape de vidange (13) est agencée dans l'élément de fixation inférieur.

Fig. 1

Fig.2

A - A

Fig.3

Fig. 4

Fig.5

Fig. 6

Fig. 7

fig 8

fig 9

fig10